# EUROPEAN PATENT SPECIFICATION

(11) **EP 0 564 664 B1**
(45) Date of publication and mention of the grant of the patent: **11.06.1997**
(21) Application number: 91312077.0
(22) Date of filing: 01.01.1992
(51) Int. Cl.: H01M 8/22, H01M 8/06

(54) **Preparation and regeneration of slurries for use in zinc-air batteries**
Herstellung und Regenerierung von Schlämmen für die Anwendung in Zinkluftbatterien
Préparation et régénération des boues pour l'utilisation dans les générateurs électrochimiques air-zinc

(43) Date of publication of application: 13.10.1993
(73) Proprietor: ELECTRIC FUEL (E.F.L.) LTD., Jerusalem 91230 (IL)
(72) Inventor: Goldstein,Jonathan R., Jerusalem (IL); Gektin,Inna, Jerusalem 97459 (IL); Givon,Menachem, Mobile Post, The Negev (IL)
(74) Representative: Hillier, Peter

(56) References cited:
- EP-A- 0 483 017
- DE-A- 2 417 571
- EXTENDED ABSTRACTS FALL MEETING, Chicago, IL, 9th - 14th October 1988, vol. 88, no. 2, pages 133-134, Electrochemical Society, Princeton, NJ, US; H.B. SIERRA ALCAZAR et al.: "Performance of slurry Zn-air recharge and discharge cells with KOH-LiOH electrolyte"

## Description

The present invention relates to a process for the preparation and regeneration of a slurry used in rechargeable zinc-air batteries generally, and more particularly, to such rechargeable electric batteries intended for use in electric vehicles and energy storage systems.

Various proposals have been made in the past for electric powered vehicles. To date, for a number of reasons, electric vehicle systems have yet to become commercially viable generally, for urban and highway applications. There have been proposals to employ zinc/air batteries for urban vehicle propulsion. An example is the following publication: Improved slurry zinc/air systems as batteries for urban vehicle propulsion, by P.C. Foller, Journal of Applied Electrochemistry 16 (1986), 527 - 543.

Metal/air battery structures are described in the following publications: U.S. Patent No. 4,842,963, entitled Zinc Electrode and Rechargeable Zinc-Air Battery: U.S. Patent No. 4,147,839, entitled Electrochemical Cell with Stirred Slurry; U.S. Patent No. 4,908,281, entitled Metal/air Battery with Recirculating Electrolyte; U.S. Patent No. 3,847,671, entitled Hydraulically-Refuelable Metal-Gas Depolarized Battery System; U.S. Patent No. 4,925,744, entitled Primary Aluminum-Air Battery; U.S. Patent No. 3,716,413, entitled Rechargeable Electrochemical Power Supply; U.S. Patent No. 4,925,744, entitled Primary Aluminum-Air Battery. In U.S. Patent No. 3,592,698, entitled Metal Fuel Battery with Fuel Suspended in Electrolyte, there is described inter alia a method for circulating an electrolyte/metal fuel powder mixture through the batteries; U.S. Patent No. 4,126,733, entitled Electrochemical Generator Comprising an Electrode in the Form of a Suspension, relates to a similar subject using a circulated suspension of inert cores coated with an electrochemically active material. In U.S. Patent No. 4,341,847, entitled 'Electrochemical Zinc-Oxygen Cell', there is described a method in which an electrolyte is circulated in the annular space between concentric electrodes.

Electrical energy storage systems are described in the following publications: U.S. Patent No. 4,843,251 entitled Energy Storage and Supply Recirculating Electrolyte; Energy on Call by John A. Casazza et al, IEEE Spectrum June, 1976, pp 44 - 47; U.S. Patent No. 4,275,310, entitled Peak Power Generation; U.S. Patent No. 4,124,805, entitled Pollution-Free Power Generating and Peak Power Load Shaving System; U.S. Patent No. 4,797,566, entitled Energy Storing Apparatus.

Regneration of spent zinc-containing alkaline electrolyte is described in a number of prior patents. For example, in DE-A-24 17 571 claiming priority from U.S. Patent No. 3,847,671 (mentioned above) whole spent electrolyte is subjected to electrolysis, when zinc deposited at the cathode is removed with a wiper blade. The thus-removed zinc is said to be substantially heavier than the electrolyte (35-40% KOH) and thus falls to the bottom of each cell. In a particular embodiment, the cathode and anode are specified as being made from copper (or silver-plated copper) and carbon, respectively. In U.S. Patent No. 3,981,747, it is proposed to regenerate the spent zinc in an alkaline electrolyte by reaction with a strongly electronegative metal, such as magnesium or aluminum, which displaces the zinc. In U.S. Patent No. 4,341,847 (also mentioned above), spent zinc in the alkaline electrolyte is regenerated either by reversing the current and plating zinc on the anode, or by merely mechanically replacing zinc oxide particles by active zinc particles.

Moreover, it is of importance in batteries containing zinc electrodes that the zinc should not be consumed by a reaction with aqueous electrolyte, especially alkaline electrolyte, which generates hydrogen gas, which reaction merely corrodes the zinc and prevents its availability of the latter for producing electric current. A number of prior patents relate to this problem. Thus, e.g., in U.S. Patent No. 4,112,205, double salts containing both mercuric and quaternary ammonium ions, are used as inhibitors in galvanic cells comprising zinc anodes, notably in Leclanche type batteries containing ammonium chloride/zinc chloride electrolyte; U.S. Patent No. 3,945,849 employs quaternary ammonium halides as inhibitor for zinc anodes in similar primary cells. U.S. Patent No. 4,195,120 teaches alkaline cells containing a predominantly zinc anode and as a hydrogen evolution inhibitor, a surfactant which is an organic phosphate ester of the ethylene oxide adduct type. Metal oxide inhibitors for zinc (in practice ZnO) electrodes are described in U.S. Patent No. 4,084,047, in which the inhibitors are mixed thoroughly into the ZnO; the inhibitors taught in this patent are binary combinations of oxides which exclude mercuric oxide, the latter being regarded as an unsatisfactory additive for the ZnO electrode. According to U.S. patent No.4084047, it was known to mix or alloy the active zinc in zinc-zinc oxide anodes and its supporting grid (e.g. copper or silver structures) with 0.5-5.0 wt.% mercury or mercuric oxide). It will also be appreciated by persons skilled in the art that amalgamation of zinc with mercury has been known for a very long time and that it is carried out in neutral, or more usually in acid solution, e.g. by reacting zinc with mercuric chloride in dilute hydrochloric acid.

EP-0-483017, which falls to be considered under Article 54(3) EPC only, discloses a process for obtaining zinc and mercury from zinc-air battery electrolyte slurries by treating with alkali, decanting to give a zinc/mercury amalgam and a solution containing oxides on zinc. The zinc is extracted by electrolysis.

In the document entitled 'Extended Abstracts Fall Meeting, Chicago I1, Oct 9-14, 1988 Vol 88 No.2 pages 133-134, (Alcazar et al) slurry zinc-air cells are disclosed with an electrolyte containing lithium hydroxide (LiOH). The system disclosed relies on the complete solubilisation of the discharged zinc in the cell as on oversaturated zincate, by means of the LiOH and other additives and achieves a value of 228.8 Ampere hour/liter for the discharge specific capacity of the electrolyte.

The improved performance of the invention follows from the special properties of the zinc generated in the electrowinning process, i.e. the high surface area and low density (i.e. high porosity). This zinc allows battery construction to be simpler requiring only a static bed anode of zinc particles and electrolyte.

It is an object of the present invention to make possible from a practical point of view, the general commercial viability of zinc-air batteries, more particularly for use in electric vehicle propulsion and energy storage systems. A more specific object of the invention is to provide a process for preparing a rechargeable slurry for use in zinc-air batteries. Another object of the invention is to provide a method for the inhibition of corrosion in particulate zinc for use in rechargeable zinc-air batteries, and more particularly, in such batteries intended for use in electric vehicles and energy storage systems. Other objects of the invention will become apparent from the description which follows.

The present invention provides a process for the preparation and regeneration of a slurry for use in Zinc-air batteries, said slurry comprising particulate zinc from an admixture which comprises the following components:
a. zinc which has been at least partly oxidized to an oxidation product selected from zinc oxide, zinc hydroxide and zincates;
b. an aqueous solution comprising potassium hydroxide and potassium zincate; and
c. an inorganic and/or organic inhibitor ingredient effective to inhibit the interaction of zinc and potassium hydroxide in aqueous solution;
which process comprises constituting said admixture and subjecting it, after dilution with potassium hydroxide and water, to the following steps:
i) electrolyzing said admixture containing said slurry in its diluted form until no more than a preselected amount of zinc remains in the solution in a cell having a corrosion-resistant anode and a cathode which is non-zinc-adherent and removing the zinc which deposits on said cathode periodically by a method selected from brushing, scraping, vibration, and the use of liquid jets;
ii) breaking up the zinc removed from the cathode into particles by brushing, stirring, or pumping; and
iii) combining zinc from step (ii) with at least additional potassium hydroxide;
provided that the current density at the cathode is preselected so that in conjunction with the non-zinc-adherent characteristic of the cathode, the electrowon particulate zinc will have a bulk density within the range of 0.2-1.1 g/cc and a surface area within the range of 0.5-6 m²/g.

Preferably, the weight ratio zinc: potassium hydroxide solution is adjusted to within the range 1: 0.5 - 2.0; and the weight ratio zinc: (c) is adjusted to within the range 1:0.00001-0.04; and wherein at least one component selected from (d), (e) , (f), and (g) is present in the reconstituted charged slurry; where (d) is a gelling agent, (e) is a fibrous and/or particulate filler (f) is a labelling agent and (g) is a dissolved electrolyte extender, and it (they) are adjusted to within the following weight percentages based on the weight of the total slurry, namely, (d) 0.3-3.0%, (e) 1.0-10.0%, (f) 0.001-1.0% and (g) 0.1-10.0%, provided that the percentage of zinc in the slurry is adjusted to within the range of 33.3-67.0 wt.%.

Desirably, the current density at the cathode is preselected so that in conjunction with the non-zinc-adherent characteristic of the cathode, the deposited zinc will have a bulk density within the range 0.3-1.1 g/cc and a surface area within the range 0.75-5.0 m²/g.

Advantageously, a process according to any of the preceding claims, wherein the current density at the cathode lies within the range 10-600 milliamp/cm² and at least one of the following two conditions applies with regard to the material of the electrodes, namely:the cathode is selected from magnesium, titanium and stainless steel cathodes; the anode is a nickel anode.

Preferably, the slurry in its diluted form in step 1) is from 5 to 12 molar in potassium and containing up to 5 wt% dissolved zinc oxide and/or electrolysis is carried out in a continuous manner.

The electrowon zinc is subjected to the action of an effective corrosion inhibiting amount of at least the oxide selected from the oxides of antimony, bismuth, cadmium, gallium, indium, lead, thallium and tin.

Preferably at least one oxide is present as component(c) of the slurry, whereby electrowon zinc is subject to the action of said at least one oxide in situ.

### DETAILED DESCRIPTION OF THE INVENTION

In a particular embodiment according to the process of the present invention, particulate zinc formed in the process, in an alkaline slurry, is subjected to the action of an effective corrosion inhibiting amount of at least one oxide selected from the oxides of antimony, bismuth, cadmium, gallium, indium, lead, mercury, thallium and tin; the at least one oxide preferably constitutes 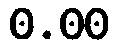 1 - 4. 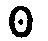 (e.g. 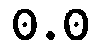 5- 4. 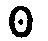 ) parts by weight, based on the weight of the zinc. It may be noted that both red and yellow forms of mercuric oxide are useful in the practice of this embodiment of the invention.

Examples of slurry components (a)-(g) mentioned above are: (a) zinc oxide, zinc hydroxide, zincates; (b) potassium hydroxide; (c) inhibitors selected from the inorganic inhibitors recited in the preceding paragraph, namely, mercuric oxide, lead oxide, cadmium oxide, tin oxide, antimony oxide, bismuth oxide, gallium oxide, indium oxide, thallium oxide, and the organic inhibitor tetramethylammonium hydroxide; (d) polyacrylic acid; (e) graphite; (f) cresol-red dye; (g) sodium silicate.

In the reconstituted charged slurry obtained by the process of the invention, the weight ratio zinc: aqueous Group Ia metal hydroxide(s) solution is preferably 1 : 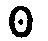 .5 - 2. 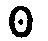 , and when component (c) is present the preferred zinc:(c) weight ratio is 1 : 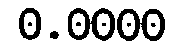 1 - 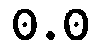 4 (e.g. 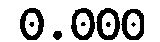 5 - 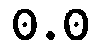 4). Components (d), (e), (f) and (g), if any or all of these are present in the reconstituted charged slurry, are preferably present within the following weight percentages based on the weight of the total slurry, namely, (d) 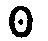 .3-3. 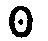 %, (e) 1. 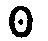 -1 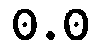 %, (f) 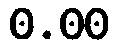 1-1. 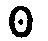 % and (g) 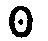 .1-1 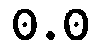 %, provided that the percentage of zinc in the slurry is within the range of 33.3-67. 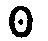 wt.%, preferably 45. 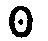 -6 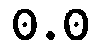 wt.%.

It is preferred that in step (ii) the current density at the cathode (which may be, for example, within the range 10-600 milliamp./cm²) is preselected so that in conjunction with the non-zinc-adherent characteristic of the cathode, the electrowon zinc will have, after consolidating into a particular structure, a density within the range 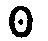 .2-2. 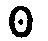 (e.g. 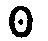 .3-1.1) g./cc and a surface area within the range 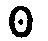 .75-5. 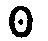 m²/g.

Exemplary non-zinc-adherent cathodes may be made of, e.g., magnesium, titanium or stainless steel. An exemplary corrosion-resistant anode may be made of, e.g., nickel, sintered nickel, or nickel mesh with a surface coating of cobalt/nickel oxide catalyst.

The electrolysis step may, for example, be carried out at a temperature within the range 2 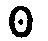 -35°C, e.g. for a time period of between 1 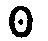 and 6 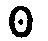 minutes. It is also contemplated that the electrolysis step may be carried out continuously, as part of an overall continuous or semi-continuous regeneration process.

Illustratively, the dissolved phase separated in step (i) may be from 5 to 12 molar in potassium ions and may contain from 1 to 1 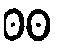 g./l. dissolved zinc. The electrolysis may be carried out until (by way of example) no more than 2 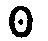 g./l. of zinc remains in the solution.

The process of the invention will now be illustrated by the following non-limitative Examples.

### EXAMPLE I

A zinc-containing electrolytic slurry was prepared for discharge in a zinc-air cell. The slurry was made by thoroughly mixing together zinc powder (5 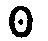 g., 3 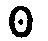 mesh, having a density and surface area, respectively, of approximately 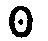 .6 g./cc. and 1. 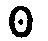 m²/g.), 3 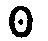 wt.% aqueous potassium hydroxide solution (4 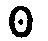 g.), Acheson graphite (7.5 g.) as conductive filler, mercuric oxide (2 g.) as zinc-corrosion and/or organic inhibitor and polyacrylic acid ( 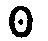 .5 g.) as gelling agent. The slurry had a density of approximately 2 g./ml.; it was a gel-like suspension which exhibited no segregation of zinc particles and no appreciable generation of hydrogen over a time period.

About 25 ml. slurry were introduced into the slurry compartment of a zinc-air cell, when about 1 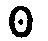 Ahr. of discharge capacity was observed, 1 A for 1 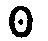 hours at an average voltage of 1.2V until a 1V cutoff. At this point, only about one-half of the zinc had actually been discharged.

The partially discharged slurry was rinsed out of the cell with the aid of about 25 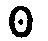 ml. 3 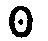 wt.% aqueous potassium hydroxide solution containing 2 wt.% dissolved zinc oxide. The slurry/rinsing solution mixture was stirred for about 3 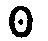 minutes at 5 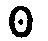 °C. This mixture contained dissolved potassium zincate, potassium hydroxide and gelling agent, and undissolved zinc particles, corrosion inhibitor and graphite filler.

The solid and liquid components were separated by filtration through porous nylon and the filtered solids were retained for later reformulation. The clear filtrate was transferred to an electrolytic bath which contained two immersed nickel anodes flanking a central stainless steel cathode. Each plate had the dimensions 5 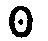 x 5 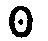 x 1 mm., and was fitted with current carrying leads; there was a 1 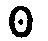 mm. space on each side between the cathode and the anodes.

The electrolyte was circulated at a rate of 25ml./minute while a current of 25A was applied (5 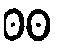 milliamp/cm² at the cathode) at a voltage of 3V. The bath temperature was maintained at 2 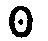 -3 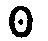 °C by external cooling. The electrolyte returning from the cooler was directed so as to stream between the plates, entering at the base of the bath and exiting at above the level of the top of the plates, thereby immediately removing the hot liquid zone and any gas bubbles. From time to time, deionized water or alkali was added to the bath to maintain the alkali concentration.

The cathode was transferred to a separate container every ten minutes, where the deposited zinc was removed with a plastic spatula and consolidated into a particulate structure by means of a revolving nylon brush, while a clean cathode was placed in the electrolytic bath to continue the zinc recovery process. The brush was operated at 1 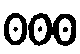 rpm for three minutes, which afforded alkali-moist zinc particles below about 1000 µm (3 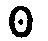 mesh) particle size, suitable for reformulation of the slurry for re-use in the battery discharge process. The zinc particles had a density of 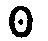 .7 g./cc and a surface area of 1.1 m²/g. After about 3 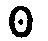 minutes of electrolyzing the separated liquid phase from the discharged slurry, the bath was found on analysis to contain about 2 wt.% zinc, the original concentration of the slurry rinse-out solution. This indicated that all of the zinc in the dissolved phase of the discharged slurry had been recovered. On a duplicate run, with washing (to remove alkali) and drying of the electrolytically recovered zinc, the dry zinc content of the particles was about 12.5 g., indicating a current efficiency of about 8 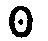 % at the specified current density.

Approximately 25 ml. of slurry were reconstituted for a further discharge cycle in the zinc-air cell. The alkali-moist zinc particles were mixed with the solid residue from the nylon filter and 1 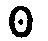 ml. more of alkaline rinse solution. The mixture was stirred for one hour to ensure adequate equilibration of the inhibitor additive with freshly regenerated zinc particles. An extra make-up quantity of 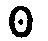 .25 wt.% polyacrylic acid gelling agent was added to the reformulated slurry because, the gelling agent previously present in the electrolyte had been unduly diluted and to some extent destroyed by the recovery process steps. The slurry now appeared gel-like as before and exhibited neither obvious segregation of zinc particles nor generation of hydrogen bubbles. In the zinc air cell, it gave an equivalent discharge performance to the first run. The Zn:K ratio in the slurry (which contained approximately 5 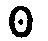 wt.% Zn), as determined by atomic absorption spectroscopy, was about 6:1.

### EXAMPLE II

Clear filtrate (25 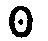 ml.) containing 3 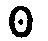 wt.% aqueous potassium hydroxide and 5 wt.% zinc oxide (as zincate), obtained by separating solid and liquid components of a partially spent zinc-containing electrolytic slurry, as described in Example I, above, was transferred to an electrolytic bath which contained two immersed nickel anodes flanking a central stainless steel cathode. Each plate had the dimensions 5 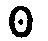 x 5 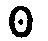 x 1 mm., and was fitted with current carrying leads; there was a 1 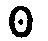 mm. space on each side between the cathode and the anodes.

The electrolyte was circulated at a rate of 25ml./minute while a current of 25A was applied (5 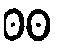 milliamp/cm² at the cathode) at a voltage of 3V. The bath temperature was maintained at 2 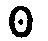 -3 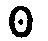 °C by external cooling. The electrolyte returning from the cooler was directed so as to stream between the plates, entering at the base of the bath and exiting at above the level of the top of the plates, thereby immediately removing the hot liquid zone and any gas bubbles. From time to time, deionized water or alkali was added to the bath to maintain the alkali concentration.

The cathode was transferred to a separate container every ten minutes, where the deposited zinc was removed and consolidated into a particulate structure by means of a revolving nylon brush, while a clean cathode was placed in the electrolytic bath to continue the zinc recovery process. The brush was operated at 1 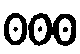 rpm for three minutes, which afforded alkali-moist zinc particles below about 3 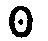 mesh particle size and having a bulk density of 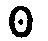 .6 g./cc.

After about 3 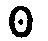 minutes of electrolysis, there was obtained a quantity of alkali-moist zinc, containing about 12.5 g. dry zinc, thus indicating a current efficiency of about 8 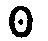 % at the specified current density. This product was introduced into 25 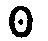 ml. of 3 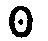 wt.% KOH solution, to which 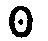 .4 g. red mercuric oxide had been added, and the mixture was stirred at 5 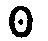 °C for one hour, at the end of which all the red color had disappeared, indicating that the mercuric oxide had been taken up by the zinc. At this stage the product was filtered off through a porous nylon cloth, for later slurry reformulation. By gasometric methods, it was found to have a low gassing rate for hydrogen, 5 x 1 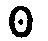 ⁻³ ml./min./g. zinc (compared to 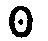 .2 ml./min./g. zinc for untreated zinc), on attempted reaction with 3 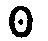 wt.% KOH at 6 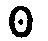 °C.

It was surprisingly found that the HgO-treated zinc remaining after slurry discharge in cells could be used to protect untreated electrolytically recovered zinc by mixing therewith, and this was also found to be the case for zinc treated originally with other inhibitor oxides. For example, with HgO-treated zinc the slurry residue from discharging as much as 95% of the total available zinc in a cell, after reformulating with the required makeup quantity of freshly electrowon zinc, provided acceptable inhibition of corrosion on repeated recycling, with minimal makeup inhibitor. The HgO-treated zinc was mixed with 12.5 g. 3 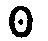 wt.% aqueous potassium hydroxide, and the slurry gelled with 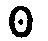 .25 g. polyacrylic acid, when it had a density of about 2g./ml. About 1 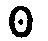 ml. of gelled slurry, which exhibited neither obvious segregation of zinc particles nor generation of hydrogen bubbles, were introduced into the slurry compartment of a zinc-air cell. The cell provided 1A for five hours at an average discharge rate of 1.2V, until a cut-off voltage of 1V. Since there were about 10g. zinc in the cell, the zinc utilization was about 60%. When the discharge was run with untreated zinc, the cell passivated after one hour due to excessive hydrogen gassing which blocked the electrolyte path to the air electrodes of the cell.

### EXAMPLE III

Following the details of Examples II, but substituting yellow for red mercuric oxide, gave similar results, but all the yellow mercuric oxide had been utilized after 15 minutes at 50°C in the procedure of Example I.

### EXAMPLE IV

Following the details of Example II, but substituting lead oxide (PbO) for mercuric oxide, gave similar results, but the corrosion rate was somewhat higher, 0.04 ml./min.g. zinc.

While the invention has been particularly described, it will be appreciated by persons skilled in the art that modifications and variations are possible without departing from the scope of the invention as defined in the appended claims.

## Claims

1. A process for the preparation and regeneration of a slurry for use in zinc-air batteries, said slurry comprising particulate zinc from an admixture which comprises at least the following components:
a. zinc which has been at least partly oxidized to an oxidation product selected from zinc oxide, zinc hydroxide and zincates;
b. an aqueous solution comprising potassium hydroxide and potassium zincate; and
c. an inorganic and/or organic inhibitor ingredient effective to inhibit the interaction of zinc and potassium hydroxide in aqueous solution;
which process comprises constituting said admixture and subjecting it, after dilution with potassium hydroxide and water, to the following steps:
i) electrolyzing said admixture containing said slurry in its diluted form, until no more than a preselected amount of zinc remains in the solution, in a cell having a corrosion-resistant anode and a cathode which is non-zinc-adherent and removing the zinc which deposits on said cathode by a method selected from brushing, scraping, vibration, and the use of liquid jets;
ii) breaking up the zinc removed from the cathode into particles by brushing, stirring, or pumping,
iii) combining zinc from step (ii) with at least additional potassium hydroxide,
provided that the current density at the cathode is preselected so that in conjunction with the non-zinc-adherent characteristic of the cathode, the electrowon particulate zinc will have a bulk density within the range of 0.2-1.1 g/cc and a surface area within the range of 0.5-6 m²/g.

2. A process according to claim 1, wherein the cathode is one selected from magnesium, titanium and stainless steel cathodes.

3. A process according to claim 1 wherein the weight ratio zinc: potassium hydroxide solution is adjusted to within the range 1: 0.5 - 2.0; and the weight ratio zinc: (c) is adjusted to within the range 1:0.00001-0.04; and wherein at least one component selected from (d), (e), (f), and (g) is present in the reconstituted charged slurry; where (d) is a gelling agent, (e) is a fibrous and/or particulate filler (f) is a labelling agent and (g) is a dissolved electrolyte extender, and it (they) are adjusted to within the following weight percentages based on the weight of the total slurry, namely, (d) 0.3-3.0%, (e) 1.0-10.0%, (f) 0.001-1.0% and (g) 0.1-10.0%, provided that the percentage of zinc in the slurry is adjusted to within the range of 33.3-67.0 wt.%.

4. A process according to claim 1 or 2, wherein the current density at the cathode is preselected so that in conjunction with the non-zinc-adherent characteristic of the cathode, the deposited zinc will have a bulk density within the range 0.3-1.1 g/cc and a surface area within the range 0.75-5.0 m²/g.

5. A process according to any of the preceding claims, wherein the current density at the cathode lies within the range 10-600 milliamp/cm² and at least one of the following two conditions applies with regard to the material of the electrodes, namely: the cathode is selected from magnesium, titanium and stainless steel cathodes; the anode is a nickel anode.

6. A process according to any of the preceding claims, wherein at least one of the following two conditions applies:
(a) the slurry in its diluted form in step i) is from 5 to 12 molar in potassium ions and contains up to 5 wt % dissolved zinc oxide; and
(b) electrolysis is carried out in a continuous manner.

7. A process according to any of the preceding claims, wherein the electrowon zinc, in alkaline slurry, is subjected to the action of an effective corrosion inhibiting amount of at least one oxide selected from the oxides of antimony, bismuth, cadmium, gallium, indium, lead, thallium and tin.

8. A process according to claim 7, wherein said at least one oxide is present in component (c) of said slurry, whereby the electrowon zinc is subjected to the action of said at least one oxide in situ.

## Patentansprüche

1. Verfahren zum Herstellen und Regenerieren eines Schlamms zur Verwendung in Zink-Luft-Batterien, wobei der Schlamm Zinkteilchen aus einer Beimengung enthält, die die folgenden Bestandteile aufweist:
a) Zink, welches zumindest teilweise zu einem Oxidationsprodukt, wie Zinkoxid, Zinkhydroxid oder Zinkaten oxidiert worden ist;
b) eine wässrige Lösung, die Kaliumhydroxid und Kaliumzinkat enthält; und
c) einen anorganischen und/oder organischen Hemmzusatzstoff, der die Wechselwirkung zwischen Zink und Kaliumhydroxid in der wässrigen Lösung hemmt;
wobei das Verfahren die Bildung dieser Beimengung und ihre Behandlung nach der Verdünnung mit Kaliumhydroxid und Wasser in den folgenden Schritten beinhaltet:
i) Elektrolysieren der Beimengung, die den Schlamm in seiner verdünnten Form enthält, in einer Zelle, die eine korrosionsbeständige Anode und eine Kathode aufweist, welche nicht für Zink adhesiv ist, bis nicht mehr als eine vorgegebene Menge des Zinks in der Lösung übrig bleibt, und Entfernen des Zinks, welches sich an der Kathode anlagert, durch Bürsten, Schaben, Vibrationen oder durch den Einsatz von Flüssigkeitsstrahlen;
ii) Aufbrechen des von der Kathode entfernten Zinks in Partikel durch Bürsten, Rühren oder Pumpen, und
iii) Vereinigen des Zinks aus dem Schritt (ii) mit zumindest zusätzlichem Kaliumhydroxid,
unter der Voraussetzung, daß die Stromdichte an der Kathode so gewählt wird, daß in Verbindung mit der nicht adhesiven Eigenschaft der Kathode für Zink die durch Elektrolyse gewonnenen Zinkteilchen eine Schüttdichte im Bereich von 0,2 bis 1,1 g/cm³ und eine Oberfläche im Bereich von 0,5 bis 6 m²/g aufweisen.

2. Verfahren nach Anspruch 1,
bei dem die Kathode aus Magnesium, Titan oder Edelstahl ist.

3. Verfahren nach Anspruch 1,
bei dem das Gewichtsverhältnis Zink zu Kaliumhydroxidlösung im Bereich von 1 : 0,5 bis 2 und das Gewichtsverhältnis Zink zu (c) im Bereich von 1 : 0,00001 bis 0,04 eingestellt wird, wobei zumindest eine Komponente, die aus (d), (e), (f) und (g) ausgewählt ist, in dem neu gebildeten, aufgeladenen Schlamm vorhanden ist, wobei (d) ein Gelbildner, (e) ein fasriger und/oder körniger Füller, (f) ein Markierungsmittel und (g) ein gelöstes Elektrolytstreckmittel ist und diese innerhalb der folgenden Gew.-%-Bereiche, basierend auf dem Gewicht des Schlamms, eingestellt werden, nämlich (d) 0,3 bis 3 %, (e) 1 bis 10 %, (f) 0,001 bis 1 % und (g) 0,1 bis 10 %, unter der Voraussetzung, daß der Prozentsatz des Zinks in dem Schlamm im Bereich von 33,3 bis 67 Gew.-% eingestellt wird.

4. Verfahren nach Anspruch 1 oder 2,
bei dem die Stromdichte an der Kathode so vorgewählt wird, daß in Verbindung mit der nicht adhesiven Eigenschaft der Kathode für Zink das angelagerte Zink eine Schüttdichte im Bereich von 0,3 bis 1,1 g/cm³ und ein Oberfläche im Bereich von 0,75 bis 5 m²/g aufweist.

5. Verfahren nach einem der vorstehenden Ansprüche,
bei dem die Stromdichte an der Kathode im Bereich von 10 bis 600 mA/cm² liegt und zumindest eine der folgenden beiden Bedingungen mit Bezug auf das Elektrodenmaterial vorliegt, nämlich: die Kathode ist aus Magnesium, Titan oder Edelstahl; die Anode ist eine Nickelanode.

6. Verfahren nach einem der vorstehenden Ansprüche,
bei dem zumindest eine der beiden folgenden Bedingungen vorliegt:
(a) der Schlamm in seiner verdünnten Form im Schritt (i) ist 5- bis 12-molar an Kaliumionen und enthält bis zu 5 Gew.-% gelöste Zinkoxide; und
(b) die Elektrolyse wird in einer kontinuierlichen Weise ausgeführt.

7. Verfahren nach einem der vorstehenden Ansprüche,
bei dem das durch die Elektrolyse gewonnene Zink der Wirkung einer wirksamen Korrosionshemmstoffmenge von zumindest einem Oxid, ausgewählt aus den Oxiden von Antimon, Wismut, Cadmium, Gallium, Indium, Blei, Thallium und Zinn, ausgesetzt wird.

8. Verfahren nach Anspruch 7,
bei dem zumindest ein Oxid in der Komponente (c) des Schlamms vorhanden ist, wodurch das durch die Elektrolyse gewonnene Zink der Wirkung von zumindest einem Oxid in situ ausgesetzt wird.

## Revendications

1. Procédé de préparation et de régénération d'une suspension utilisée dans des batteries zinc-air, ladite suspension comprenant des particules de zinc provenant d'une matière ajoutée qui comprend au moins les composants suivants:
a. du zinc qui a été au moins partiellement oxydé pour donner un produit d'oxydation choisi parmi l'oxyde de zinc, l'hydroxyde de zinc ou les zincates;
b. une solution aqueuse comprenant de l'hydroxyde de potassium et du zincate de potassium; et
c. un agent inhibiteur organique et/ou inorganique, efficace pour inhiber l'interaction du zinc et de l'hydroxyde de potassium dans une solution aqueuse;
ledit procédé prévoyant de constituer de ladite matière ajoutée et de la soumettre, après dilution avec de l'hydroxyde de potassium et de l'eau, aux étapes suivantes:
i) électrolyse de ladite matière ajoutée contenant ladite suspension sous sa forme diluée, jusqu'à ce que seule une quantité prédéterminée de zinc reste dans la solution, dans une cellule munie d'une anode résistant à la corrosion et d'une cathode n'adhèrant pas au zinc et éliminant le zinc qui se dépose sur ladite cathode par un procédé sélectionné de brossage, raclage, vibration, et l'utilisation de jets de liquide;
ii) désagrégation du zinc éliminé de la cathode en particules par brossage, brassage ou pompage.
iii) mélange du zinc de l'étape ii) avec au moins une addition d'hydroxyde de potassium,
étant entendu que la densité du courant à la cathode est présélectionnée de manière à ce que, en conjonction avec la caractéristique de non adhésion au zinc de la cathode, les particules de zinc obtenues par extraction électrolytique possèdent une masse volumique située entre 0,2 et 1,1 g/cm³ et une aire de surface située entre 0,5 et 6 m²/g.

2. Procédé selon la revendication 1, dans lequel la cathode est choisie parmi des cathodes au magnésium, au titane et en acier inoxydable.

3. Procédé selon la revendication 1, dans lequel le rapport pondéral zinc/solution d'hydroxyde de potassium est ajusté dans la plage 1 : 0,5-2,0; et le rapport pondéral zinc/(c) est ajusté dans la plage 1 : 0,0001-0,04; et dans lequel au moins un des composants choisis parmi (d), (e), (f) et (g) est présent dans la suspension chargée reconstituée; dans lequel (d) est un agent gélifiant, (e) est une matière de charge sous forme de fibres et/ou de particules, (f) est un agent de marquage et (g) est un agent diluant dissous formant électrolyte; lequel (lesquels) est (sont) ajusté(s) selon les pourcentages de poids suivants, basés sur le poids total de la suspension, à savoir (d) 0,3-3,0%, (e) 1,0-10,0%, (f) 0,001-1,0 % et (g) 0,1-10,0%; étant entendu que le pourcentage de zinc dans la suspension est ajusté dans la plage 33,3-67,0 % en poids.

4. Procédé selon la revendication 1 ou 2, dans lequel la densité de courant à la cathode est présélectionnée de sorte que, en conjonction avec la caractéristique de non adhérence au zinc de la cathode, le zinc déposé présente une masse volumique située entre 0,3 et 1,1 g/cm³ et une aire de surface variant entre 0,75 et 5,0 m²/g.

5. Procédé selon l'une quelconque des revendications précédentes, dans lequel la densité du courant à la cathode se situe dans la plage 10-600 milliamp/cm² et au moins une des deux conditions suivantes s'applique par rapport au matériau des électrodes, à savoir: la cathode est sélectionnée parmi des cathodes au magnésium, au titane et en acier inoxydable, et l'anode est une anode au nickel.

6. Procédé selon l'une quelconque des revendications précédentes, dans lequel au moins une des deux conditions suivantes s'appliquent:
(a) la suspension sous sa forme diluée de l'étape i) varie entre 5 et 12 moles en ions potassium et contient jusqu'à 5 % en poids d'oxyde de zinc dissous; et
(b) l'électrolyse est réalisée en continu.

7. Procédé selon l'une quelconque des revendications précédentes, dans lequel le zinc obtenu par extraction électrolytique, dans la suspension alcaline, est soumis à l'action d'une quantité efficace d'au moins un oxyde inhibiteur de corrosion choisi parmi les oxydes d'antimoine, de bismuth, de cadmium, de gallium, d'indium, de plomb, de thallium et d'étain.

8. Procédé selon la revendication 7, dans lequel, undit oxyde au moins est présent dans le composé (c) de la suspension, le zinc obtenu par extraction électrolytique étant soumis à l'action d'undit oxyde au moins, in situ.
